# EUROPÄISCHE PATENTSCHRIFT

(11) **EP 0 928 522 B1**
(45) Veröffentlichungstag und Bekanntmachung des Hinweises auf die Patenterteilung: **20.12.2000**
(21) Anmeldenummer: 97941861.3
(22) Anmeldetag: 01.09.1997
(51) Int. Cl.: H04Q 7/18

(54) **VERFAHREN ZUR ANPASSUNG EINES EMPFANGSGERÄTES AN ÜBERTRAGUNGSBEDINGUNGEN UND ENTSPRECHENDES EMPFANGSGERÄT**
METHOD FOR ADAPTING A RECEIVER TO TRANSMISSION CONDITIONS, AND THE ADEQUATE RECEIVER
PROCEDE D'ADAPTATION D'UN RECEPTEUR AUX CONDITIONS DE TRANSMISSION, ET LE RECEPTEUR CORRESPONDANT

(30) Priorität: 27.09.1996 DE 19639887
(43) Veröffentlichungstag der Anmeldung: 14.07.1999
(73) Patentinhaber: SIEMENS AKTIENGESELLSCHAFT, 80333 München (DE)
(72) Erfinder: ERBEN, Christian, D-85396 Eching (DE); RINGELHAAN, Otmar, D-86926 Greifenberg (DE)
(86) Internationale Anmeldenummer: DE9701909
(87) Internationale Veröffentlichungsnummer: WO9813949

(56) Entgegenhaltungen:
- WO-A-90/06634
- WO-A-92/22145
- WO-A-95/31047
- WO-A-96/13134
- GB-A- 2 216 752

## Beschreibung

Die Erfindung bezieht sich auf ein Verfahren zur Anpassung der Funktion eines in einem TDMA-System betriebenen Empfangsgerätes, wie z.B. Pagers oder Mobilfunkgerätes an die Übertragungsbedingungen, wobei eine redundant codierte Nachricht verwendet wird, die als Nachrichtenblock je in Bursts von n-Rahmen einer Nachrichtenrahmenfolge enthalten ist, bei welchem in dem Zeitraum nach Decodierung von Information eines Nachrichtenblocks bis vor Einlangen des nächsten Nachrichtenblocks wesentliche Funktionsgruppen des Empfangsgerätes von' der Stromversorgung getrennt werden.

Ebenso bezieht sich die Erfindung auf ein Empfangsgerät mit einem HF-Empfangsblock, einem Empfangs-Logikblock, einem Steuerblock und einer Stromversorgung, beispielsweise Mobilfunkgerät, Pager od.dgl. wobei der Empfangs-Logikblock zur Verarbeitung und Decodierung von TDMA-Signalen eingerichtet ist und der Logik- und der Steuerblock dazu eingerichtet sind, nach Empfang und Decodierung einer Nachricht bis vor Einlangen der nächsten Nachricht wesentliche Funktionsgruppen des Empfangsgerätes von der Stromversorgung zu trennen.

Bei netzunabhängigen Empfängern bzw. Mobilfunkgeräten, wie z.B. solchen nach dem GSM-Standard arbeitenden, wird besonderer Wert auf niedrigen Stromverbrauch gelegt, um mit einer Batterie bzw. einer Akkumulatorladung einen möglichst langen Betrieb, insbesondere Standby-Betrieb zu gewährleisten. Man ist daher bestrebt, nicht benötigte Funktionsgruppen so lange wie möglich von der Versorgungsspannung zu trennen, um den mittleren Stromverbrauch zu reduzieren.

Bei Geräten, die in einem Funknetz mit Zeitmultiplex-Organisation arbeitet, gibt es ein Bereitschaftsmodus, auch Standby-Betrieb genannt, können beispielsweise alle nicht benötigten Funktionsgruppen periodisch von der Stromversorgung getrennt werden, um den mittleren Energiebedarf zu senken.

Die Übertragungstechnik moderner Mobilfunknetze, wie z.B. des GSM-Netzes, bedient sich hochredundanter Codes, um den Einfluß von Störungen, insbesondere von Gleichkanalstörungen zu verringern und um damit bei sonst festen Vorgaben, wie Frequenzbereich, Anzahl der Basisstationen, Sendeleistung etc. die Verkehrsleistung eines Systems zu steigern. Die Datenverarbeitung, insbesondere der Decodierung zur Wiederherstellung der ursprünglichen Nachricht erfordert allerdings einen erheblichen Rechenaufwand, der wiederum einen hohen Stromverbrauch nach sich zieht.

Andererseits sind die Geräte und die verwendeten Codes auf den vorgegebenen, schlechtestmöglichen Fall der Übertragungsbedingungen konzipiert, die in der Praxis nur gelegentlich vorliegen, sodaß es unwirtschaftlich scheint, die Geräte durchgehend mit vollem Rechenaufwand für die Datenverarbeitung/Decodierung zu betreiben.

Von dieser Erkenntnis ausgehend, hat man beispielsweise versucht, während des Betriebes eines Mobilfunkgerätes mit einem nach einem Viterbi-Algorithmus arbeitenden Entzerrer die Anzahl der Zustände des Algorithmus flexibel an die tatsächlich gemessene Dauer von Mehrwegestörungen anzupassen, wie in der EP 496 152 A2 (Roke Manor Research Ltd.) beschrieben.

Eine Aufgabe der Erfindung liegt darin, ein Verfahren und einen nach diesem Verfahren arbeitenden Empfänger anzugeben, das durch Anpassen der tatsächlich decodierten Rahmen bzw. Bursts an die Übertragungsbedingungen, genauer gesagt die Empfangsbedingungen, eine Verringerung des mittleren Rechenaufwandes und damit des Strombedarfes ermöglicht.

Diese Aufgabe wird, ausgehend von einem Verfahren der eingangs genannten Art dadurch gelöst, daß lediglich eine entsprechend der Redundanz der verwendeten Codierung minimal erforderliche Anzahl von Bursts der Nachricht decodiert wird und hierauf die Abschaltung der Funktionsgruppen erfolgt, solange die Decodierung die benötigte Nachricht liefert, jedoch bei erfolgloser Decodierung auf die Decodierung einer größeren Anzahl von Bursts übergegangen wird.

Die Erfindung nutzt somit die Tatsache aus, daß die volle Redundanz des verwendeten Codes über große Zeiträume hinweg keineswegs benötigt wird und nutzt diesen Umstand zur Energieeinsparung, wodurch ein längerer Bereitschaftsbetrieb erreicht wird.

Dabei ist es von Vorteil, wenn nach dem Empfang und dem Auswerten der minimal erforderlichen Anzahl von Bursts eines Nachrichtenblocks im Falle einer erfolglosen Decodierung der unmittelbar darauf empfangene Rahmen bzw. Burst ausgewertet wird und daraufhin bei insgesamt erfolgreicher Decodierung die Funktionsblockabschaltung erfolgt bzw. bei erfolgloser Decodierung der nächstfolgende Rahmen bzw. Burst ausgewertet wird, u.s.f.

Andererseits kann es bei einem erfindungsgemäßen Verfahren, bei welchem bei jeder erfolgreichen Decodierung eines Nachrichtenblocks ein Zählerstand um einen bestimmten Wert erhöht, bei jeder erfolglosen Decodierung jedoch um einen anderen bestimmten Wert erniedrigt wird, wobei der Zählerstand nur einen vorgegebenen Maximalwert annehmen kann, auch zweckmäßig sein, wenn bevorzugt nur ein Teil der Bursts zur Decodierung herangezogen wird, bei Fehldecodierung, d.h. Verringerung des Zählerstandes, jedoch solange sämtliche Bursts decodiert werden, bis sich der Zählerstand auf einen vorgegebenen Wert erhöht hat, der kleiner oder gleich dem vorgegebenen Maximalwert ist. Bei einer bevorzugten Variante ist die Information des Nachrichtenblocks mittels eines Fire-Codes und eines Faltungscodes codiert.

In manchen Fällen kann es auch zielführend sein, wenn bei erfolgloser Decodierung eines Nachrichtenblocks durch den Fire-Decoder eine Neubewertung einer begrenzten Anzahl der wahrscheinlich unzuverlässigsten Bits der Eingangssignale noch vor dem Faltungs-Decodierer durchgeführt und der Decodiervorgang mit den sich ergebenden Kombinationen solange wiederholt wird, bis die Decodierung erfolgreich ist oder alle Kombinationen durchlaufen wurden.

Die Erfindung läßt sich mit großem Vorteil auch in jenen Fällen einsetzen, bei welchen die Nachricht eine Paginginformation ist und das Verfahren im Pagingbetrieb durchgeführt wird.

Die erwähnte Aufgabe wird auch mit einem Empfangsgerät wie oben angegeben gelöst, bei welchem erfindungsgemäß der Decodierer dazu eingerichtet ist, lediglich eine entsprechend der Redundanz der verwendeten Codierung minimal erforderliche Anzahl von Bursts jedes Nachrichtenblocks zu decodieren, solange eine dem Decodieren zugeordnete Steuer- und Prüfeinheit feststellt, daß die Decodierung erfolgreich ist und die benötigte Nachricht liefert, wobei die Steuer- und Prüfeinheit nach Decodierung die Funktionsgruppen von der Stromversorgung trennt und die Steuer- und Prüfeinheit den Decodierer dazu veranlaßt, eine größere Anzahl von Nachrichtenbursts zu decodieren, falls die Decodierung der minimalen Anzahl von Bursts die Nachricht nicht liefern konnte.

Bei einem solchen Empfangsgerät, das z.B. der Empfangsteil eines Mobilfunkgerätes oder ein sog. Pager sein kann, ergeben sich die gleichen Vorteile wie im Zusammenhang mit dem Verfahren angegeben.

Mit Vorteil sind der Decodierer und die Steuer- und Prüfeinheit dazu eingerichtet, nach dem Empfang und dem Auswerten der minimal erforderlichen Anzahl von Bursts jedes Nachrichtenblocks im Falle einer erfolglosen Decodierung den unmittelbar darauf empfangenen Rahmen bzw. Burst auszuwerten

Eine zweckmäßige Weiterbildung des Empfangsgerätes nach der Erfindung zeichnet sich dadurch aus, daß die dem Decodierer zugeordnete Steuer- und Prüfeinheit einen Zähler aufweist, dessen Zählerstand sich bei jeder erfolglosen Decodierung eines Nachrichtenblocks um einen bestimmten Wert erhöht, bei erfolgloser Decodierung jedoch um einen anderen bestimmten Wert erniedrigt, wobei ein Maximalwert des Zählerstandes vorgegeben ist, wobei bevorzugt die Decodierung lediglich einer Minimalanzahl von Bursts jedes Nachrichtenblocks erfolgt, bei Fehlcodierung, d.h. bei einer Verringerung des Zählerstandes jedoch solange eine Decodierung sämtlicher Bursts jedes Nachrichtenrahmens erfolgt, bis sich der Zählerstand auf einen vorgegebenen Wert erhöht hat, der kleiner oder gleich dem vorgegebenen Maximalwert ist.

Bei einer bevorzugten Variante liegt die Information des Nachrichtenblocks in einer mittels einer Fire-Codes sowie eines Faltungscodes codierten Form vor.

Eine weitere Verringerung des Stromverbrauches läßt sich in manchen Fällen erreichen, wenn der Logikempfangsblock einen Manipulator aufweist, der dazu eingerichtet ist, eine begrenzte Anzahl der wahrscheinlich unzuverlässigsten Bits der Eingangssignale noch vor dem Faltungsdecodierer zu verändern und der Decodierer dazu eingerichtet ist, den Decodiervorgang mit den sich daraus ergebenden Kombinationen so lange zu wiederholen, bis die Decodierung erfolgreich ist oder alle Kombinationen durchlaufen werden.

Besondere Vorteile der Erfindung ergeben sich auch, falls die Nachricht eine Paginginformation ist und der Logik- und Steuerblock LSB) dazu eingerichtet ist, wesentliche Funktionsgruppen im Pagingbetrieb zwischen den Paginginformationen abzuschalten.

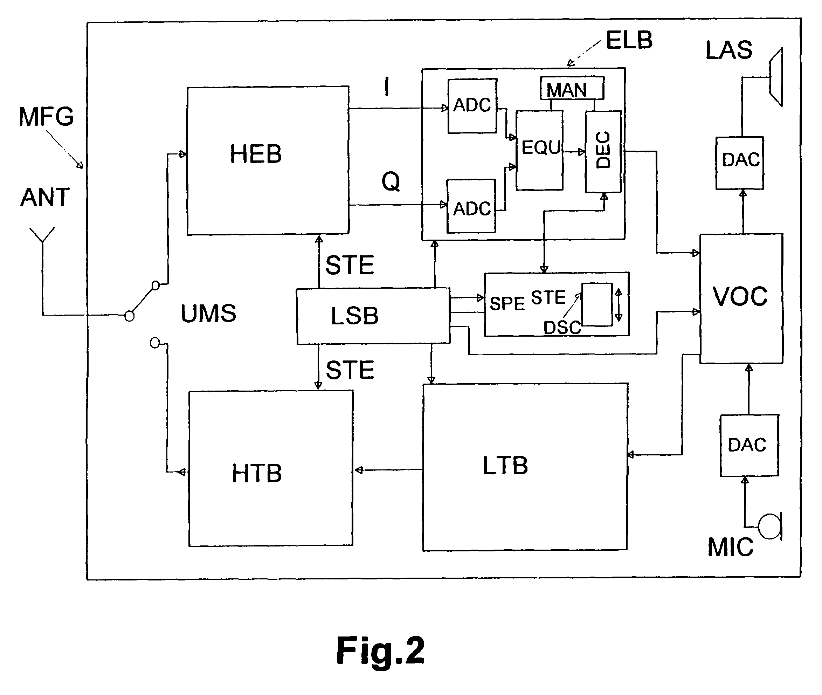

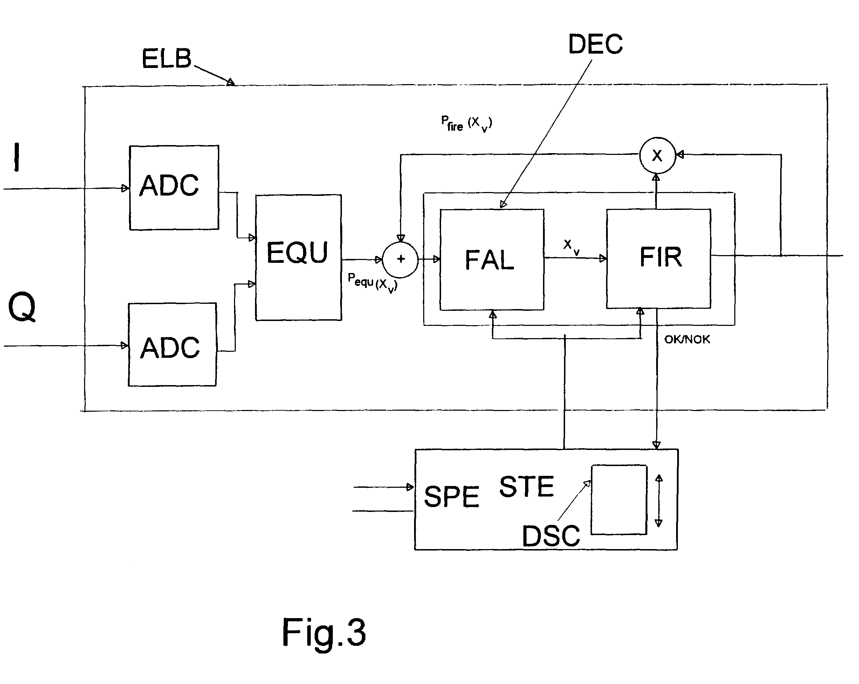

Die Erfindung samt weiterer Vorteile ist im folgenden an Hand beispielsweiser Ausführungsformen näher erläutert, die in der Zeichnung veranschaulicht sind. In dieser zeigen Fig. la bis lc in einem Diagramm den schematischen Signalverlauf in einem GSM-System von einem Pagingruf zum nächsten, Fig. 2 ein Blockschaltbild eines Empfängers nach der Erfindung und Fig. 3 ein Detail aus dem Blockschaltbild einer weiteren Ausführungsform der Erfindung.

Die Erfindung wird nachstehend unter besonderer Bezugnahme auf ein Mobilfunknetz im GSM-System erläutert. Dieses System arbeitet mit einer TDMA-Rahmenstruktur, die genauer z.B. in "Mobile Radio Communications", Raymond Steele, IEEE Press New York beschrieben ist. Auf dieses und andere hier erwähnte Dokumente wird ausdrücklich im Zusammenhang mit der Offenbarung der Anmeldung verwiesen. Die Codierung und Kanalverschachtelung ist auch in dem "GSM-Recommendations, Draft prETS 300 575, March 1995 (GSM 0.5 03 Version 4.2.0) beschrieben und zur Theorie der Fire-Codes und anderer Codes seien die Bücher "Prüfbare und korrigierbare Codes" W. Wesley Peterson, R. Oldenburg Verlag 1967 sowie "Wireless Digital Communications, Modulation and Spread Spectrum Applications", Dr. Kamilo Feher, Prentice-Hall PTR, genannt.

Für die vorliegende Erfindung ist beispielsweise der sogenannte "Standby-Betrieb" von Interesse, in dem der Empfänger empfangsbereit ist. Wie aus Fig. la hervorgeht, empfängt der Empfänger eines GSM-Mobilfunigerätes periodisch während einer aktiven Zeit t_{A} vier TDMA-Rahmen 0, 1, 2, 3 von je 4,6 ms Dauer, welche z.B. je in dem Burst "O" der Paginginformation enthalten sind, die zu den "Control Channels" zählt. In die Zeit danach, mit t_{R} als "Ruhezeit" bezeichnet, fallen je nach System 102 bis 459 TDMA-Rahmen, was einer Zeitspanne von etwa 0,5 bis 2,1 s entspricht. Während dieser Zeit können dem Stand der Technik entsprechend wesentliche Funktionsgruppen des Gerätes abgeschaltet sein.

Das Blockschaltbild nach Fig. 2 zeigt schematisch ein Mobilfunkgerät MFG, das im wesentlichen einen HF-Empfangsblock HEB, einen Empfangslogikblock ELB, einen HF-Sendeblock HTB, einen Logik-Sendeblock LTB, einen Logik- und Steuerungsblock LSB und einen Vocoder VOC besitzt. Der HF-Sendeblock bzw. Empfangsblock sind über eine Umschalter UMS an eine Antenne ANT angeschlossen. An den Vocoder sind über einen Digital/Analogwandler DAC bzw. einen Analog/Digitalwandler ADC ein Mikrophon MIC bzw. ein Lautsprecher LAS angeschlossen. Der nähere Aufbau des Mobilfunkgerätes ist, soweit er nicht die Erfindung berührt, nicht dargestellt.

Der Empfangslogikblock ELB weist für von dem HF-Empfangsblock HEB einlangende Signale I, Q je einen Analog/Digitalwandler ADC auf. Diesen Wandlern folgen ein Entzerrer (Equalizer) EQU und ein Decoder DEC. Dem Decoder zugeordnet ist eine Steuer- und Prüfeinheit SPE mit einem Zähler DSC, der im GSM-System als "downlink signalling failure counter" bezeichnet wird. Außerdem enthält der Logikempfangsblock noch einen später beschriebenen Manipulator MAN.

Dem Logik- und Steuerblock LSB kommt unter anderem die Aufgabe zu, sämtliche nicht benötigte Funktionsgruppen bzw. Bauteile z.B. mit Hilfe von Steuersignalen STE von der hier nicht gezeigten Stromversorgung (Batterie, Akkumulator) abzuschalten. Natürlich erhält der Logik- und Steuerblock LSB dafür geeignete Informationen von den verschiedenen Blöcken.

Im folgenden sollen Ablauf und Funktion des Verfahrens bzw. des Empfangsgerätes nach der Erfindung näher erläutert werden.

Innerhalb der Control Channels werden bei dem beispielsweise betrachteten GSM-System Blöcke verwendet, die eine feste Größe von 184 Bits besitzen. Zur Fehlererkennung und -korrektur werden diese Bits gemäß einem Fire-Code mit 40 Parity-Bits geschützt, und daraufhin werden vier sogenannte "Tail-Bits" angefügt. Dieser Block aus 228 Bits wird nun nach einem unsystematischen Faltungscode mit der Rate ½ codiert, sodaß sich letztlich ein Rahmen mit 456 codierten Bits ergibt.

Für die Übertragung wird nun ein solcher Rahmen nach einem vorgegebenen Muster auf z.B. vier bzw. acht Bursts verteilt, die dann im Zeitmultiplex mit anderen Bursts (von anderen Kanälen) übertragen werden.

Empfangsseitig werden üblicherweise sämtliche zu einem Rahmen gehörige Bursts ausgewertet und zur Rekonstruktion der Nachricht herangezogen. Dazu müssen - analog zur Sendeseite - die Signale aus den einzelnen Bursts wieder zu einem Rahmen zusammengesetzt werden. Dieser Rahmen wird nun in dem Decoder DEC, genaugenommen in einem ersten Decodierer dieses Decoders, zunächst von der Redundanz des Faltungscodes befreit. Da ein unsystematischer Code vorliegt, haben die Ergebnis-Bits keine Entsprechung im übertragenen Signal. Zur Ermittlung eines bestimmten Bits wird vielmehr die ganze zugehörige Signal- Nachbarschaft, genaugenommen der komplette empfangene Rahmen, untersucht und ausgewertet. Ein Ergebnis-Bit kann somit auch ausgewertet werden, falls die Signal-Nachbarschaft durch nicht ausgewertete Bursts gewissermaßen ausgedünnt ist. Bei dem vorliegenden Beispiel ist die Grenze der Auswertbarkeit etwa dann erreicht, wenn nur die Hälfte der zu einem Rahmen gehörenden Bursts ausgewertet wird.

Die nach dieser Decodierung ermittelten Bits sind noch mit der Redundanz des Fire-Codes behaftet, d.h. sie werden in einem zweiten Decodierer des Decoders DEC nach dem Fire-Code entsprechend decodiert. Dieser Decodierer bzw. der Decoder DEC entscheidet zwischen "Auswertung" und "Verwurf", und diese Verwurfrate kann nun auch dazu dienen, die jeweils erforderliche Anzahl der auszuwertenden Bursts zu bestimmen, um durch Reduktion der Auswertezeit den mittleren Stromverbrauch zu verringern. Die Steuer- und Prüfeinheit SPE ist nun dazu eingerichtet, bei gelungener Decodierung eines Bursts der Paginginformation den Stand des Zählers um einen bestimmten Wert, z.B. um eins, zu erhöhen, bei erfolgloser Decodierung, d.h. bei "Verwurf" diesen Stand jedoch um einen anderen bestimmten Wert, z.B. um vier zu erniedrigen. Falls der Wert Null erreicht wird, erfolgt Umbuchung, d.h. es wird eine andere Funkzelle gesucht.

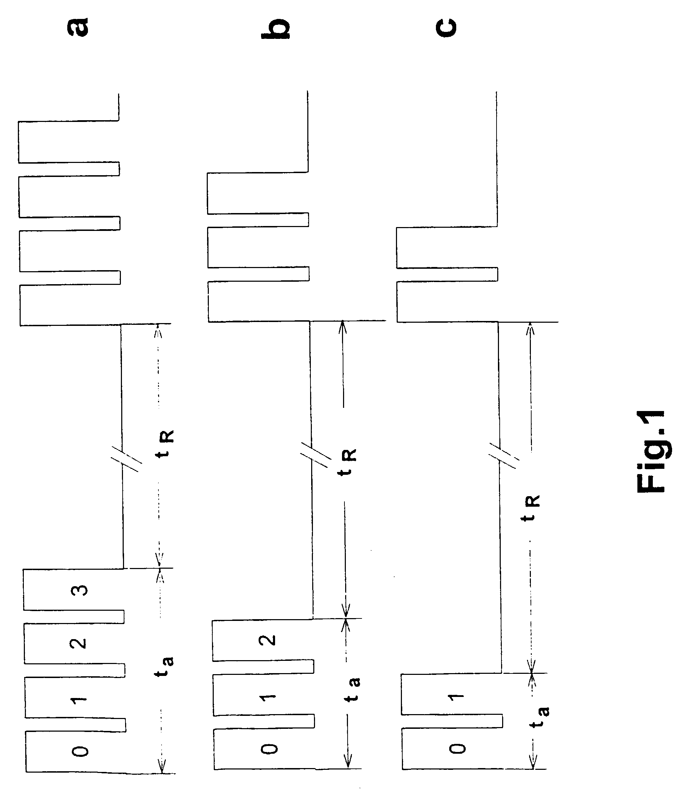

Falls der vorgegebene Endwert oder ein anderer vorgegebener Wert des Zählers DSL erreicht ist, kann man versuchen, den Ausdünnungsgrad der Verarbeitung/Decodierung zu verringern. Fig. 1b veranschaulicht den Fall, daß nur die ersten drei TDMA-Rahmen 0, 1, 2 verarbeitet werden, wobei nach dem dritten Rahmen über den Logik- und Steuerblock LSB die Abschaltung der meisten Funktionsgruppen von der Stromversorgung erfolgt, wodurch die aktive Zeit t_{A} (mit hohem Strombedarf) verringert und die Ruhezeit t_{R} (mit geringem Strombedarf) verlängert werden. Wenn man, wie Fig. 1c zeigt, zwei TDMA-Rahmen, hier die Rahmen 2, 3, von insgesamt je vier Rahmen wegläßt, erhält man eine weitere Verlängerung der Ruhezeit t_{R}.

Bei einer Ausführung der Erfindung werden somit immer dann wenn bzw. solange der Zählerstand des Zählers seinen Maximalwert aufweist, beispielsweise nur die je ersten zwei TDMA-Rahmen 0, 1 ausgewertet und decodiert. Solange die Decodierung auf diese Weise erfolgreich ist, was entsprechend günstige Empfangsbedingungen voraussetzt, wird sich an diesem (maximalen) Zählerstand nichts ändern. Bei erfolgloser Decodierung jedoch wird der Zählerstand herabgesetzt und die Steuer- und Prüfeinheit SPE veranlaßt nun eine Verarbeitung sämtlicher empfangener TDMA-Rahmen der Paginginformation, und zwar so lange, bis wieder der maximale Zählerstand erreicht ist. Hier kann auch eine zeitliche Vorgabe dahingehend erfolgen, daß sicherheitshalber nun eine bestimmte Zeit lang sämtliche - hier vier - TDMA-Rahmen der Paginginformation verarbeitet werden, bevor versucht wird, wieder auf die Verarbeitung/Decodierung einer geringeren Anzahl zurückzugeben.

Eine Variante der Erfindung sieht vor, daß nach Empfang und Auswertung einer bestimmten Minimalanzahl von Rahmen bzw. Bursts eines Pagingblocks, hier z.B. die zwei Rahmen 0, 1 der unmittelbar darauf folgende Rahmen, hier der Rahmen 2, nur dann ausgewertet und decodiert wird, falls die Decodierung der vorangehenden Rahmen keinen Erfolg brachte. War die Decodierung der ersten beiden Rahmen zufolge guter Empfangsbedingungen zielführend, wird auf die Auswertung weiterer Rahmen verzichtet. Es werden somit periodisch jeweils nur so viele Rahmen bzw. Bursts decodiert, wie gerade erforderlich, was natürlich voraussetzt, daß die Signalverarbeitung und die folgende Entscheidung sehr rasch erfolgen müssen.

Eine weitere Ausgestaltung der Erfindung betrifft die Manipulation der Primärsignale, d.h. die Signale vor der Decodierung des Faltungscodes, wofür ein Bit-Manipulator MAN vorgesehen ist. Falls nur die Hälfte der Bursts (Rahmen) ausgewertet wird, somit die verbleibende Redundanz und damit der in diesem Zusammenhang relevante euklidische Abstand zwischen (gültigen) Codeworten relativ gering ist, kann bei Verwurf durch den Fire-Decoder noch versucht werden, durch gezielte Manipulation der Primärsignale ein anderes, für den Fire-Decoder akzeptables Decodierungsergebnis herbeizuführen.

Dazu dienlich kann jene Kanalinformation sein, die angibt, mit welcher Wahrscheinlichkeit ein Primärbit eine Null oder eine Eins ist. Der Bit-Manipulator MAN verändert dann eine begrenzte Anzahl jener Bits, die mit großer Wahrscheinlichkeit unzuverlässig sind, und mit diesen veränderten Bits wird der Decodiervorgang mit immer wieder neuen Kombinationen so lange wiederholt, bis entweder der Fire-Decoder erfolgreich war oder alle vorgegebenen Kombinationen durchlaufen wurden.

Zur näheren Erläuterung sei auf Fig. 3 verwiesen, welche eine Realisierung der Erfindung in größerem Detail zeigt.

Der Equalizer bzw. Entzerrer EQU liefert die empfangenen Bursts in Form eines Bitstroms P_{equ} (X_{V}) mit inhärenter Zuverlässigkeitsinformation für jedes Bit an den Decoder DEC, der den Faltungsdecoder FAL sowie den Firedecoder FIR enthält. Beim erstmaligen Decodierungsdurchlauf liegt noch keine Information des Firedecoderausganges vor, d.h. P_{fire} (X_{V}) = 0. Nach der Faltungsdecodierung wird der decodierte Bitstrom X_{V}, welcher keine Zuverlässigkeitsinformation mehr enthält, an den Firedecoder FIT weitergeleitet.

Ist das Ergebnis des Decodiervorganges nicht in Ordnung, wird ein Signal NUK an die Steuer- und Prüfeinheit STE, die sich natürlich auch innerhalb des Decoders DEC befinden könnte, abgegeben, und der blockdecodierte Bitstrom, multipliziert mit der vom Firedecoder erzeugten Zuverlässigkeitsinformation kann an den Eingang des Faltungsdecoders FAL zurückgekoppelt werden. Dieser startet nun nochmals mit den Werten P_{equ} (V) des Equalizers EQU, ergänzt mit der nun von Null verschiedenen Zuverlässigkeitsinformation P_{fire} (X_{V}) des Firedecoders FIR den Decodiervorgang. Es ist das der Vorgang, der in Fig. 2 symbolisch dem Manipulator MAN zukommt.

Die Erfindung wurde vorstehend im Zusammenhang mit dem Empfangtsteil eines Mobilfunkgerätes beschrieben, doch muß es klar sein, daß sie ebenso in Verbindung mit anderen Empfangsgeräten anwendbar ist, die in einem TDMA-System mit entsprechend redundantem Code arbeiten. Beispielsweise können dies Pagerempfänger sein, oder aber auch digitale, batteriebetriebene Rundfunk- oder Fernsehempfänger, bei welchen eine Minimierung des Stromverbrauches gleichfalls erwünscht ist, d.h. die Erfindung ist nicht auf Fälle beschränkt, in welchen ein Pagingbetrieb vorliegt, und die erfindungsgemäße Verarbeitung der Information kann jegliche Nachricht betreffen.

## Patentansprüche

1. Verfahren zur Anpassung der Funktion eines Empfangsgerätes an die Übertragungsbedingungen, bei dem
a) von einer redundant codierten Nachricht, die als Nachrichtenblock mittels mehrerer Bursts in Zeitschlitzen übertragen wird nur ein erster Teil der Bursts decodiert wird,
dadurch gekennzeichnet, daß
b) nach der Decodierung des ersten Teils der Bursts wesentliche Funktionsgruppen des Empfangsgerätes von der Stromversorgung getrennt werden, und
c) die Anzahl der zu decodierenden Bursts in Abhängigkeit von einem Decodierungsergebnis bestimmt wird.

2. Verfahren nach Anspruch 1, bei dem
nach der Decodierung einer entsprechend der Redundanz der Codierung minimal erforderlichen Anzahl von Bursts bei erfolgreicher Decodierung wesentliche Funktionsgruppen des Empfangsgerätes von der Stromversorgung getrennt werden, bei erfolgloser Decodierung eine größere Anzahl von Bursts decodiert wird.

3. Verfahren nach Anspruch 1, bei welchem bei jeder erfolgreichen Decodierung eines Nachrichtenblockes ein Zählerstand um einen bestimmten Wert erhöht, bei jeder erfolglosen Decodierung jedoch um einen anderen bestimmten Wert erniedrigt wird, wobei der Zählerstand nur einen vorgegebenen Maximalwert annehmen kann,
**dadurch gekennzeichnet,**
daß bevorzugt nur ein Teil der Bursts zur Decodierung herangezogen wird, bei Fehldecodierung, d.h. Verringerung des Zählerstandes, jedoch solange sämtliche Bursts decodiert werden, bis sich der Zählerstand auf einen vorgegebenen Wert erhöht hat, der kleiner oder gleich dem vorgegebenen Maximalwert ist.

4. Verfahren nach einem der Ansprüche 1 bis 3,
**dadurch gekennzeichnet,**
daß die Information des Nachrichtenblocks mittels eines Fire-Codes und eines Faltungscodes codiert ist.

5. Verfahren nach Anspruch 4,
**dadurch gekennzeichnet,**
daß bei erfolgloser Decodierung eines Nachrichtenblocks durch den Fire-Decoder eine Neubewertung einer begrenzten Anzahl der wahrscheinlich unzuverlässigsten Bits der Eingangssignale noch vor dem Faltungs-Decodierer durchgeführt und der Decodiervorgang mit den sich ergebenden Kombinationen solange wiederholt wird, bis die Decodierung erfolgreich ist oder alle Kombinationen durchlaufen wurden.

6. Verfahren nach einem der Ansprüche 1 bis 5,
**dadurch gekennzeichnet,**
daß die Nachricht eine Paginginformation ist und das Verfahren im Pagingbetrieb durchgeführt wird.

7. Empfangsgerät mit einem HF-Empfangsblock, einem Empfangs-Logikblock, einem Steuerblock und einer Stromversorgung, beispielsweise Mobilfunkgerät, Pager oder dgl. wobei der Empfangs-Logikblock (ELB) zur Verarbeitung und Decodierung von Zeitschlitz-Signalen eingerichtet ist und der Logik- und der Steuerblock (LSB) dazu eingerichtet sind, nach Empfang und Decodierung einer Nachricht bis vor Einlangen der nächsten Nachricht wesentliche Funktionsgruppen des Empfangsgerätes von der Stromversorgung zu trennen,
**dadurch gekennzeichnet,**
daß der Decodierer (DEC) dazu eingerichtet ist, lediglich eine entsprechend der Redundanz der verwendeten Codierung minimal erforderliche Anzahl von Bursts jedes Nachrichtenblocks zu decodieren, solange eine dem Decodieren zugeordnete Steuer- und Prüfeinheit (SPE) feststellt, daß die Decodierung erfolgreich ist und die benötigte Nachricht liefert, wobei die Steuer- und Prüfeinheit nach Decodierung die Funktionsgruppen von der Stromversorgung trennt und die Steuer- und Prüfeinheit den Decodierer dazu veranlaßt, eine größere Anzahl von Nachrichtenbursts zu decodieren, falls die Decodierung der minimalen Anzahl von Bursts die Nachricht nicht liefern konnte.

8. Empfangsgerät nach Anspruch 7,
**dadurch gekennzeichnet,**
daß der Decodierer (DEC) und die Steuer- und Prüfeinheit (SPE) dazu eingerichtet sind, nach dem Empfang und dem Auswerten der minimal erforderlichen Anzahl von Bursts jedes Nachrichtenblocks im Falle einer erfolglosen Decodierung den unmittelbar darauf empfangenen Rahmen bzw. Burst auszuwerten.

9. Empfangsgerät nach Anspruch 7,
**dadurch gekennzeichnet,**
daß die dem Decodierer (DEC) zugeordnete Steuer- und Prüfeinheit (SPE) einen Zähler (DSC) aufweist, dessen Zählerstand sich bei jeder erfolglosen Decodierung eines Nachrichtenblocks um einen bestimmten Wert erhöht, bei erfolgloser Decodierung jedoch um einen anderen bestimmten Wert erniedrigt, wobei ein Maximalwert des Zählerstandes vorgegeben ist, und bevorzugt die Decodierung lediglich einer Minimalanzahl von Bursts jedes Nachrichtenblocks erfolgt, bei Fehlcodierung, d.h. bei einer Verringerung des Zählerstandes jedoch solange eine Decodierung sämtlicher Bursts jedes Pagingrahmens erfolgt, bis sich der Zählerstand auf einen vorgegebenen Wert erhöht hat, der kleiner oder gleich dem vorgegebenen Maximalwert ist.

10. Empfangsgerät nach einem der Ansprüche 7 bis 9,
**dadurch gekennzeichnet,**
daß der Decodierer (DEC) dazu eingerichtet ist, die in einer mittels eines Fire-Codes sowie eines Faltungscodes codierter Form vorliegende Information des Nachrichtenblocks zu decodieren.

11. Empfangsgerät nach Anspruch 10,
**dadurch gekennzeichnet,**
daß der Logik-Empfangsblock (LEB) einen Manipulator (MAN) aufweist, der dazu eingerichtet ist, eine begrenzte Anzahl der wahrscheinlich unzuverlässigsten Bits der Eingangssignale noch vor dem Faltungsdecodierer zu verändern, und der Decodierer dazu eingerichtet ist, den Decodiervorgang mit den sich daraus ergebenden Kombinationen so lange zu wiederholen, bis die Decodierung erfolgreich ist oder alle Kombinationen durchlaufen wurden.

12. Empfangsgerät nach einem der Ansprüche 1 bis 11,
**dadurch gekennzeichnet,**
daß die Nachricht eine Paginginformation ist und Logik- und Steuerblock (LSB) dazu eingerichtet ist, wesentliche Funktionsgruppen im Pagingbetrieb zwischen den Paginginformationen abzuschalten.

## Claims

1. Method for adapting the function of a receiver to the transmission conditions, in which
a) only a first portion of the bursts of a redundantly coded message which is transmitted as a message block by means of a plurality of bursts in time slots is decoded, characterized in that
b) after the decoding of the first portion of the bursts, essential functional groups of the receiver are disconnected from the power supply, and
c) the number of bursts to be decoded is determined as a function of a decoding result.

2. Method according to Claim 1, in which, after the decoding of a minimum number of bursts necessary according to the redundancy of the coding, in the event of successful decoding essential functional groups of the receiver are disconnected from the power supply, and in the event of unsuccessful decoding a larger number of bursts is decoded.

3. Method according to Claim 1, in which, whenever a message block is successfully decoded a counter reading is increased by a specific value, but whenever there is unsuccessful decoding it is decreased by another specific value, the counter reading being able to assume only a predefined maximum value, characterized in that preferably only a portion of the bursts is used for decoding, but in the event of incorrect decoding, i.e. reduction of the counter reading, all the bursts are decoded until the counter reading has increased to a predefined value which is smaller than or equal to the predefined maximum value.

4. Method according to one of Claims 1 to 3, characterized in that the information of the message block is coded by means of a fire code and a convolution code.

5. Method according to Claim 4, characterized in that in the event of unsuccessful decoding of a message block by the fire decoder, a reassessment of a limited number of the probably most unreliable bits of the input signals is carried out upstream of the convolution decoding unit and the decoding process is repeated with the resulting combinations until the decoding is successful or all the combinations have been run through.

6. Method according to one of Claims 1 to 5, characterized in that the message is an item of paging information and the method is carried out in paging mode.

7. Receiver having an RF reception block, a reception logic block, a control block and a power supply, for example mobile radio, pager or the like, the reception logic block (ELB) being set to process and decode time slot signals, and the logic and control block (LSB) being set to disconnect essential functional groups of the receiver from the power supply after reception and decoding of a message and before the next message is received, characterized in that the decoding unit (DEC) is set to decode only a minimum necessary number of bursts of each message block according to the redundancy of the coding used, as long as a control and test unit (SPE) which is assigned to decoding determines that the decoding is successful and supplies the necessary message, the control and test unit disconnecting the functional groups from the power supply after decoding, and the control and test unit causing the decoding unit to decode a larger number of message bursts if the decoding of the minimum number of bursts was not able to supply the message.

8. Receiver according to Claim 7, characterized in that, after the reception and the evaluation of the minimim necessary number of bursts of each message block, in the case of unsucessful decoding the decoding unit (DEC) and the control and test unit (SPE) are set to evaluate the frame or burst which is received directly after said unsucessful decoding.

9. Receiver according to Claim 7 characterized in that the control and test unit (SPE) which is assigned to the decoding unit (DEC) has a counter (DSC) whose counter reading increases by a specific value for each unscessful decoding of a message block, but decreases by another specific value in the event of unsuccessful decoding, a maximum value of the counter reading being predefined, and preferably only a minimum number of bursts of each message block being decoded, but in the event of incorrect coding i.e. in the event of a reduction in the counter reading, all the bursts of each paging frame being decoded until the counter reading has increased to a predefined values which is smaller than or equal to the predefined maximum value.

10. Receiver according to one of Claims 7 to 9, characterized in that the decoding unit (DEC) is set to decode the message block information which is present in a form which has been coded by means of a fire code and a convolution code.

11. Receiver according to Claim 10, characterized in that the logic reception block (LEB) has a manipulator (MAN) which is set to changea limited number of the probably most unreliable bits of the input signals upstream of the convolution decoding unit, and the decoding unit is set to repeat the decoding process with the resulting combinations until the decoding is successful or all the combinations have been run through.

12. Receiver according to one of Claims 1 to 11, characterized in that the message is an item of paging information, and the logic and control block (LSB) is set, in paging mode, to switch off essential functional groups between the items of paging information.

## Revendications

1. Procédé pour adapter la fonction d'un appareil récepteur aux conditions de transmission, dans lequel
a) d'une information qui est codée avec une redondance et qui est transmise comme bloc d'informations au moyen de plusieurs salves dans des créneaux temporels, on ne décode qu'une première partie des salves,
caractérisé par le fait que
b) après le décodage de la première partie des salves, on sépare de l'alimentation en courant des groupes fonctionnels essentiels de l'appareil récepteur, et que
c) l'on détermine le nombre des salves à décoder en fonction d'un résultat de décodage.

2. Procédé selon la revendication 1, dans lequel, après le décodage d'un nombre de salves nécessaire au minimum en fonction de la redondance du codage, on sépare de l'alimentation en courant des groupes fonctionnels essentiels de l'appareil récepteur lorsque le décodage a réussi mais on décode un plus grand nombre de salves lorsque le décodage a échoué.

3. Procédé selon la revendication 1, dans lequel, à chaque réussite du décodage d'un bloc d'informations, on augmente d'une certaine valeur un état de compteur mais, à chaque échec du décodage, on diminue d'une autre valeur cet état, l'état de compteur pouvant prendre seulement une valeur maximale prescrite,
caractérisé par le fait qu'on exploite de préférence seulement une partie des salves pour le décodage mais, lors d'un échec du décodage, c'est-à-dire lors d'une diminution de l'état de compteur, on décode toutes les salves jusqu'à ce que l'état de compteur ait augmenté à une valeur prescrite qui est inférieure ou égale à la valeur maximale prescrite.

4. Procédé selon l'une des revendications 1 à 3,
caractérisé par le fait que l'information du bloc d'informations est codée au moyen d'un code Fire et d'un code de convolution.

5. Procédé selon la revendication 4,
caractérisé par le fait que, lors d'un échec du décodage d'un bloc d'informations par le décodeur Fire, on effectue avant même le décodeur de convolution une nouvelle évaluation d'un nombre limité des bits probablement les moins fiables des signaux d'entrée et on répète l'opération de décodage avec les combinaisons résultantes jusqu'à ce que le décodage ait réussi ou jusqu'à ce que toutes les combinaisons soient épuisées.

6. Procédé selon l'une des revendications 1 à 5,
caractérisé par le fait que l'information est une information de Paging et que l'on effectue le procédé lors du fonctionnement en Paging.

7. Appareil récepteur comportant un bloc récepteur HF, un bloc logique de réception, un bloc de commande et une alimentation en courant, par exemple appareil de radiocommunication mobile, Pager ou autre dispositif analogue, dans lequel le bloc logique de réception (ELB) destiné au traitement et au décodage de signaux à créneaux temporels et le bloc de logique et de commande (LSB) sont conçus pour, après la réception et le décodage d'une information et avant l'arrivée de l'information suivante, séparer de l'alimentation en courant des groupes fonctionnels essentiels de l'appareil récepteur,
caractérisé par le fait que le décodeur (DEC) est conçu pour décoder simplement un nombre, nécessaire au minimum en fonction de la redondance du codage utilisé, de salves de chaque bloc d'informations jusqu'à ce qu'une unité de commande et de test (SPE) associée au décodeur constate que le décodage a réussi et délivre l'information nécessaire, l'unité de commande et de test séparant alors de l'alimentation en courant les groupes fonctionnels après le décodage et l'unité de commande et de test commandant le décodeur pour qu'il décode un plus grand nombre de salves d'informations si le décodage du nombre minimal de salves n'a pas pu fournir l'information.

8. Appareil récepteur selon la revendication 7,
caractérisé par le fait que le décodeur (DEC) et l'unité de commande et de test (SPE) sont conçus pour évaluer, après la réception et l'évaluation du nombre minimal nécessaire de salves de chaque bloc d'informations, dans le cas d'un échec du décodage, la trame reçue immédiatement après.

9. Appareil récepteur selon la revendication 7,
caractérisé par le fait que l'unité de commande et de test (SPE) associée au décodeur (DEC) comporte un compteur (DSC) dont l'état est augmenté d'une certaine valeur à chaque réussite du décodage d'un bloc d'informations mais est diminué d'une autre valeur lors d'un échec du décodage, une valeur maximale étant prescrite pour l'état du compteur et le décodage simplement d'un nombre minimum de salves de chaque bloc d'informations s'effectuant de préférence mais, lors d'un échec du décodage, c'est-à-dire lors d'une diminution de l'état de compteur, un décodage de toutes les salves de chaque trame de Paging s'effectuant jusqu'à ce que la valeur de compteur ait augmenté à une valeur prescrite qui est inférieure ou égale à la valeur maximale prescrite.

10. Appareil récepteur selon l'une des revendications 7 à 9,
caractérisé par le fait que le décodeur (DEC) est conçu pour décoder l'information, présente sous une forme codée au moyen d'un code Fire ainsi que d'un code de convolution, du bloc d'informations.

11. Appareil récepteur selon la revendication 10,
caractérisé par le fait que le bloc logique de réception (LEB) comporte un manipulateur (MAN) qui est conçu pour modifier avant même le décodeur de convolution un nombre limité des bits probablement les moins fiables des signaux d'entrée et que le décodeur est conçu pour répéter l'opération de décodage avec les combinaisons résultant de ces modifications jusqu'à ce que le décodage ait réussi ou jusqu'à ce que toutes les combinaisons soient épuisées.

12. Appareil récepteur selon l'une des revendications 1 à 11,
caractérisé par le fait que l'information est une information de Paging et le bloc de logique et de commande (LSB) est conçu pour arrêter entre les informations de Paging des groupes fonctionnels essentiels en fonctionnement Paging.
